# EUROPEAN PATENT APPLICATION

(11) **EP 0 707 324 A1**
(43) Date of publication of application: **17.04.1996**
(21) Application number: 94910531.6
(22) Date of filing: 24.03.1994
(51) Int. Cl.: H01G 4/35, H01R 13/719

(54) **FILTER BASE FOR CONNECTOR, AND METHOD FOR ITS MANUFACTURE**

(71) Applicant: NIPPON CARBIDE INDUSTRIES CO., INC., Tokyo 100 (JP)
(72) Inventor: MIKAMI, Takemi, deceased (JP); SHIMASAKI, Hisayoshi, Shimoniikawa-gun, Toyama 939-06 (JP)
(74) Representative: Sajda, Wolf E., Dipl.-Phys.
(86) International application number: JP9400476
(87) International publication number: WO9526032

(57) **Abstract**

The present invention relates to a filter substrate for a connector used for suppressing noise transmitted via leads of a connector or others, and aims to provide a filter substrate of a large size having a small pin pitch, which can be produced with high production efficiency. The filter substrate for a connector according to the present invention has a porcelain substrate (3) having through-holes (4) to be fitted with leads of the connector and a ferrite section (1) formed integrally therewith. In a first aspect, the ferrite section (1) of a layer form is formed on the porcelain substrate (3), and, in a second aspect, the ferrite section (1) is formed in the inner wall of the through-hole (102) of the porcelain substrate (101).

## Description

### TECHNICAL FIELD

The present invention relates to a filter substrate used for providing a connector for preventing high frequency noise from leakage out of or into an electronic appliance, and to a method for the production thereof.

### BACKGROUND ART

Recently, there has been a serious problem of electromagnetic wave interference due to high frequency noise generated by electric appliances such as computers or others. In various electronic or electric appliances of industrial use or domestic use, connectors having a countermeasure for reducing high frequency noise are used for preventing noises generated therein from leakage out thereof or contrarily preventing foreign noise from entering into these appliances.

To reduce noise, it has been well-known that a circuit including a combination of inductance means (L) and capacitance means (C) is added to a signal line. An LC type noise-filter connector is used for this purpose, incorporating inductance elements L and/or capacitance elements C therein.

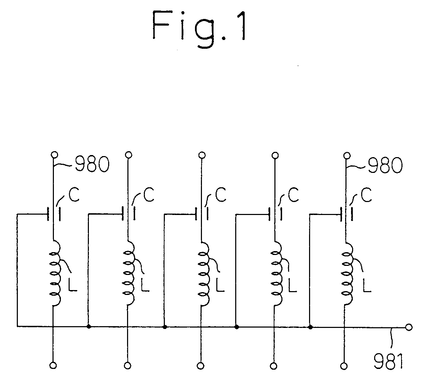

Fig. 1 illustrates an equivalent circuit of such a connector. In this drawing, reference numeral 980 denotes a lead (pin). L denotes an inductance and C denotes a capacitance provided between the lead 980 and an earth line 981. By using the connector having such an equivalent circuit as shown in Fig. 1, the leakage and entry of noise via a cable can be prevented.

A noise-suppression connector having the equivalent circuit shown in Fig. 1 or one similar thereto is disclosed, for example, in Japanese Unexamined Patent Publication (Kokai) No. 55-95281 and Japanese Unexamined Utility Model Publication (U.M. Kokai) No. 56-15043.

To realize the equivalent circuit shown in Fig. 1, a combination of a bead of a ferromagnetic substance such as ferrite and a through-type condenser is usually used on the respective lead. In this regard, the through-type condenser is one made of dielectric substance having a through-hole and electrodes on both surfaces thereof. A lead passes through the through-hole and is electrically connected to one of the electrodes. The other electrode of the through-type condenser is insulated from the lead but connected to the earth line. According to such a structure, noise is interrupted. If the number of leads increases, however, there is a problem in that it is difficult to provide a ferrite bead and a through-type condenser for each respective lead.

To solve this problem, the invention disclosed in Kokai 55-95281 uses a condenser member wherein through-holes and electrodes are provided on a dielectric substrate to form the through-type condenser integral therewith; while that disclosed in U.M. Kokai 56-15043 uses a ferrite plate having through-holes. Thereby, the production efficiency is improved.

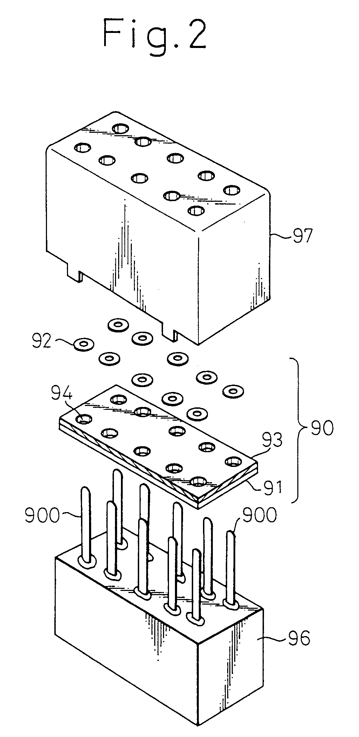

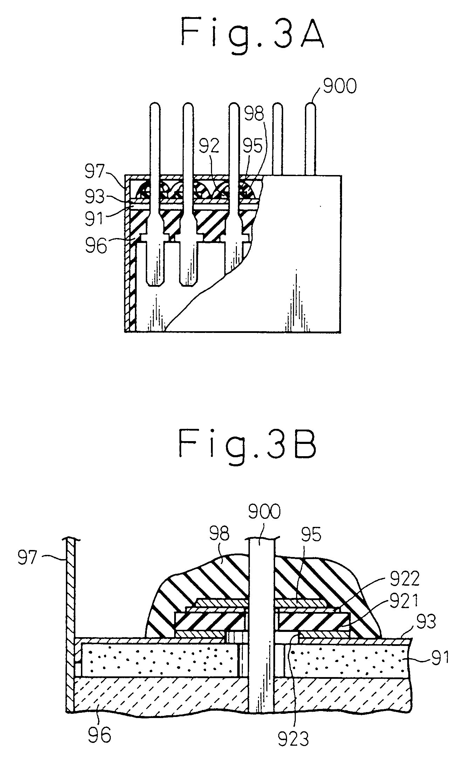

Figs. 2, 3A and 3B illustrate one example of connector described in U.M. Kokai 56-15043. Figs. 3A and 3B correspond to an assembled state, wherein Fig. 3A shows an over all structure thereof and Fig. 3B is an enlarged view in the vicinity of pin connection.

In Fig. 2, reference numeral 900 denotes a connector pin, and 96 denotes a housing made of electro-insulating material such as plastic, in which leads 900 are arranged in a row and fixed. Reference numeral 97 denotes a shield case. Reference numeral 90 denotes a filter substrate having inductance elements (L) and capacitance elements (C) for a connector, constituted by a ferrite substrate 91 having through-holes 94 and an electro-conductive layer 93 provided on the outer surface the substrate including the lateral sides thereof, on which a plurality of through-type condensers 92 are mounted. The through-type condenser 92 is mounted, for example, by soldering, after being positioned at each of the through-holes. In this regard, the through-type condenser is not limited to an annular one as illustrated but may have an incomplete annular shape lacking part thereof.

The connector assembly shown in Fig. 2 will be described with reference also to Figs. 3A and 3B.

First, the through-type condensers 92 are positioned in the through-holes 94 and then the assembly is introduced into a soldering furnace. Thereby, an LC substrate is obtained. The LC substrate is fitted with leads 900, and after a solder 95 is applied to the respective boundary area between the through-type condenser 92 and the connector pin 900, the LC substrate is introduced into a soldering furnace. Alternatively, the ferrite substrate 91 may be fitted with the leads 900 prior to the attachment of the through-type condensers 92 on the ferrite substrate, and then, after the through-type condensers 92 on which a solder has been preliminarily applied are fitted with the leads 900, the assembly is introduced into the soldering furnace. Finally, a shield case is capped to the housing, after the areas where the through-type condensers exist has been covered with a resin. Thus the connector is completed.

As shown in Fig. 3B, in the assembled state, an upper electrode 922 of the through-type condenser 92 is connected to the lead 900 with the solder 95 and a lower electrode 923 thereof to the electro-conductive layer 93. The electro-conductive layer 93 has a portion extending to a lateral side of the ferrite substrate 91 and is brought into contact with the shield case at this portion. The lower electrode 923 and the electro-conductive layer 93 of the through-type condenser 92 are provided in an area other than the peripheral portion of the through-hole, not in contact with the lead, as illustrated.

As stated above, it is possible to realize a connector having the equivalent circuit shown in Fig. 1, capable of reducing noise, by the use of filter (LC) substrate 90 for a connector shown in Fig. 2.

While being used for the connector in the above example, the LC substrate can also be used for a unit having a structure similar to the connector and thus having a similar problem to be solved, such as an IC socket. For this purpose, the LC substrate can be supplied as a single part.

According to the invention disclosed in U.M. Kokai 56-15043 and shown in Figs. 2, 3A and 3B, the ferrite substrate having through-holes is used as means for performing the inductance function, resulting in an improvement in the production efficiency compared with that obtained by the combination of individual ferrite beads.

In general, the ferrite substrate is weak in strength and thus a certain thickness is necessary when it is handled as a single part. In addition, it is necessary to provide through-holes in the ferrite plate. However, since the substrate is weak in strength, a distance between every adjacent two through-holes must be larger. According to the recent trend of miniaturization of electric appliance, a lead pitch in connectors and IC sockets is also minimized. Therefore, the LC substrate applicable to the leads arranged at a smaller pitch is required. However, the conventional substrate is unsatisfactory in this respect. On the other hand, an increase of the number of pins in one connector is contemplated. This results in the enlargement of connector size in addition to the reduction of lead pitch. However, there is a problem in that a larger LC substrate cannot be produced since the ferrite substrate is weak in strength.

Further, the ferrite substrate is obtained from a material added with a binder by molding a green sheet, including a through-hole, sized by taking a firing shrinkage into account, and firing the same. In this case, if the ferrite substrate is individually produced, the production efficiency is lowered to a large extent. To solve such a problem, in general, a large-sized substrate including a number of single substrates is first prepared and then divided into individual substrates, so that the production efficiency is improved. However, such a multi-divisional production system cannot be adopted since the ferrite substrate is weak in strength as stated before, whereby the problem of poor production efficiency remains unsolved.

### DISCLOSURE OF THE INVENTION

An object of the present invention is to provide a filter substrate for a connector of a small size obtained at a high production efficiency, and a method for the production thereof.

A filter substrate for a connector according to the present invention is characterized in that it is formed of a porcelain substrate and a ferrite section, each having through-holes through which individual leads of the connector pass and being bonded integrally with the other.

Since the ferrite sheet is weak in strength, the miniaturization and the improvement in production efficiency of the filter substrate for a connector have been inhibited in the prior art. To support the ferrite section, a reinforcing member must be added to the ferrite section. This member is required to firmly secure the ferrite section thereon and be durable against the firing process because the ferrite section is produced by the firing process. Accordingly, a porcelain substrate is added as the reinforcing member in the present invention and integrally bonded to the ferrite section.

There are two aspects for forming the ferrite section on the porcelain substrate; according to a first aspect, the ferrite section is formed on the porcelain substrate as a layer, and according to a second aspect, the ferrite section is formed in the inner wall of the through-hole of the porcelain substrate.

The filter substrate for a connector according to the present invention may be used, for example, for the ferrite substrate 91 shown in Fig. 2. When the filter substrate is used in the connector for the suppression of noise, it is preferably used together with the through-type condenser. In such a case, preferably the through-type condenser is integrally formed on the filter substrate for a connector for the ease of assembly of the connector.

### BRIEF DESCRIPTION OF THE DRAWINGS

Fig. 1 is a diagram illustrating an equivalent circuit of a connector with LC circuits;
Fig. 2 is a perspective view of a connector structure in the combination of a conventional ferrite substrate and through-type condensers;
Figs. 3A and 3B are sectional views of the conventional connector shown in Fig. 2, respectively;
Fig. 4 is a perspective view illustrating a basic structure of a filter substrate for a connector according to a first aspect of the present invention;
Fig. 5 is a perspective view illustrating a structure of a filter substrate for a connector according to a first embodiment of the present invention;
Figs. 6A and 6B are explanatory illustrations of the production process of the filter substrate for a connector of the first embodiment, respectively;
Figs. 7A and 7B are sectional views illustrating the fixation of the filter substrate of the first embodiment with a lead fitted thereto, and the through-hole of the condenser in this state, respectively;
Figs. 8A through 8C are explanatory illustrations of the production process of the filter substrate of a fifth embodiment, respectively;
Fig. 9 is a sectional view of the filter substrate for a connector of the fifth embodiment;
Figs. 10A and 10B illustrate various structures of the filter substrate consisting of porcelain substrate, ferrite section and condenser section arranged in different orders;
Fig. 11 is a partially sectioned view of a connector incorporating the filter substrate for a connector of the first aspect;
Figs. 12A and 12B illustrate a sixth embodiment of the filter substrate for a connector wherein a basic structure of a filter substrate according to a second aspect of the present invention is illustrated; Fig. 12A being an over all perspective view thereof and Fig. 12B is a sectional view of a through-hole portion;
Figs. 13A through 13C illustrate modifications of a through-hole when the ferrite section is formed in accordance with the second aspect;
Figs. 14A and 14B illustrate a method for forming the ferrite section according to the second aspect; Fig. 14A being a pin system and Fig. 14B being a screen printing system;
Figs. 15A and 15B illustrate a structure of a filter substrate according to a seventh embodiment including a ferrite section formed integrally with a through-type thick film condenser; Fig. 15A being a perspective view of the through-hole portion and Fig. 15B being a sectional view including the through-hole;
Fig. 16 illustrates the filter substrate of the seventh embodiment incorporated in the connector;
Fig. 17 is a diagram illustrating the noise-suppression effect of the filter substrate according to the second aspect wherein curve I shows the effect under a first condition and curve 2 shows the effect under a second condition; and
Fig. 18 illustrates an embodiment wherein the filter substrate according to the present invention is applied to an IC socket.

### BEST MODE FOR CARRYING OUT THE INVENTION

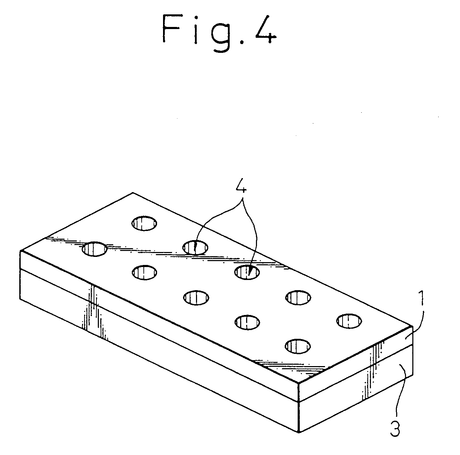

Fig. 4 illustrates a basic structure of a filter substrate for a connector according to a first aspect of the present invention.

The filter substrate for a connector according to the present invention is used while being fitted with a plurality of leads arranged in a row, and has a porcelain substrate 3 integrally formed with a ferrite section 1, in which a plurality of through-holes 4 are formed for allowing the leads to pass therethrough, as shown in Fig. 4.

Since the ferrite section 1 is weak in strength, the miniaturization of the filter substrate for a connector and the improvement in the production efficiency thereof have been inhibited. A member to be added to the ferrite section 1 for reinforcing the same must be capable of firmly carrying the ferrite section 1 thereon as well as being durable against the firing operation because the ferrite section 1 is produced through firing. Accordingly, the porcelain substrate 3 is added to the ferrite section 1 and integrally bonded.

While the filter substrate for a connector shown in Fig. 4 can be used as a ferrite substrate 91 shown, for example, in Fig. 2 as stated above, this filter substrate is preferably used together with through-type condensers when it is built into the connector for the purpose of suppressing noise. An embodiment of the filter substrate for a connector will be described below, in which through-type condensers are integrally incorporated.

The condenser section may be formed either by mounting individual through-type condensers on a porcelain substrate or ferrite layer already fired, or by providing through-holes and electrodes on a dielectric plate as disclosed in Kokai 55-95281. First, the latter method wherein the condenser section is formed integrally with the substrate will be explained. In this regard, the filter substrate for a connector shown in Fig. 4 in which the through-type condensers are provided is hereinafter referred to as an LC substrate because it has both inductance (L) and capacitance (C).

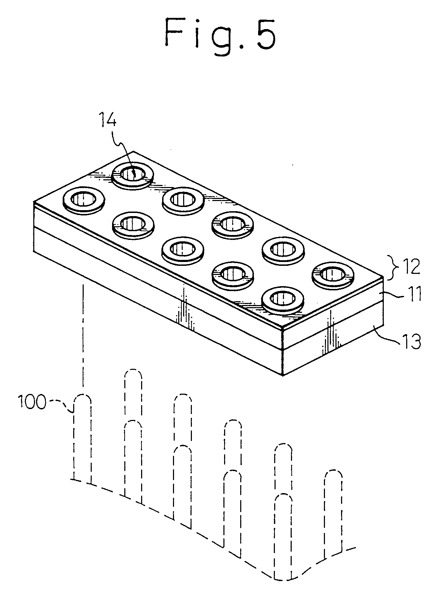

Fig. 5 illustrates a structure of a first embodiment of the filter substrate (LC substrate) for a connector according to the present invention.

As shown, this LC substrate includes a porcelain substrate 13 having a plurality of through-holes 14 for allowing a lead 100 to pass therethrough, a ferrite section 11 integrally provided on the porcelain substrate to form a layer, and a condenser section 12 having a plurality of through-holes in alignment with the through-holes 14 and a through-type condenser provided for each through-hole. In the use, one electrode of the respective through-type condenser is connected to the corresponding lead 100. Different kinds of condensers may be used while being combined with the respective leads.

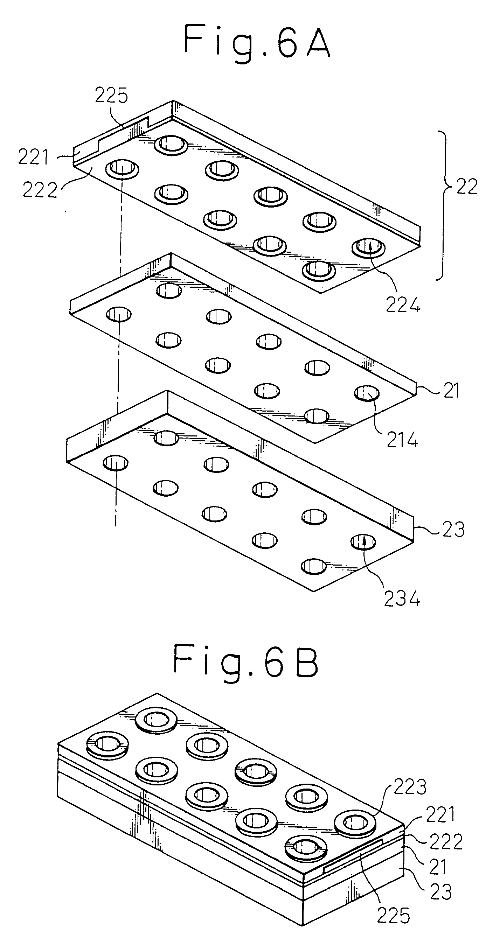

The first embodiment will be described with reference to Figs. 6A and 6B which are perspective views for explaining a process for the production of the LC substrate of the first embodiment.

First, materials for the porcelain substrate, the ferrite layer and the dielectric body of condensers, mixed with a binder or others are molded to a sheet form after being dried. Such sheets are referred to as green sheets. The respective sheet is press-molded to have through-holes while taking the shrinkage during the firing process into account. An electro-conductive paste is printed all over one surface of the green sheet for the condenser except for the peripheral area of the through-holes. This constitutes a common electrode. The electro-conductive paste is also printed on a side surface of the green sheet for the condenser to form an extension of the common electrode. On the other surface, the electro-conductive paste is printed around the respective through-holes to form patterns arranged in a discrete manner. While an annular pattern is shown in the drawing, other pattern may be adopted or a part of the annular pattern may be lacking. Also, the common electrode may be printed on the green sheet for the ferrite layer.

Fig. 6A illustrates a stage after the above steps have been completed, wherein reference numerals 21 and 23 denote the green sheets for the ferrite layer and the porcelain substrate, respectively, having the through-holes 214 and 234 and molded to have a predetermined configuration. Reference numeral 221 denotes the green sheet for the condensers having the through-holes 224 and molded to have a predetermined configuration. Fig. 6A is a perspective view as seen from a lower side on which the common electrode is to be formed, wherein reference numeral 222 denotes a surface printed with the electro-conductive paste, corresponding to the common electrode. As illustrated, the electro-conductive paste is printed on this surface except for the peripheral area of the respective through-holes 224. Reference numeral 225 denotes a surface printed with the electro-conductive paste, corresponding to the extension of the common electrode.

The respective green sheets shown in Fig. 6A are bonded together by pressing the same after being aligned with each other, for example, by using a jig or the like. Alternatively, they may be bonded by using an adhesive. Fig. 6B shows the bonded state as seen from the upper side of the green sheet for the condensers. As illustrated, electrodes are printed around the respective through-holes on the upper surface of the green sheet 221 for the condensers, while being arranged in a discrete manner. These electrodes may be printed after the green sheets have been bonded to each other.

The through-hole may be formed after the green sheets have been bonded to each other and the electrodes have been printed.

The piece shown in Fig. 6B is fired at a temperature determined with reference to the properties of the respective materials for a predetermined period, and an LC substrate is resulted.

According to the first embodiment, three layers including the porcelain substrate are formed by green sheets, which are fired after being bonded together. While, according to a second embodiment, a preliminarily-fired porcelain substrate is used.

In the second embodiment, the porcelain substrate is first prepared in a similar manner as the first embodiment wherein a green sheet having through-holes and shaped to have a predetermined configuration is fired. The subsequent process is also similar to that of the first embodiment except that the porcelain substrate has already been fired, wherein a green sheet for the ferrite section is molded and bonded to the former, and then a green sheet for the condenser section is molded and bonded thereto after the electrodes have been printed. Finally, the assembled piece is fired as a whole.

In the first embodiment, it is required that materials of the porcelain substrate, the ferrite section and the dielectric plate for the condenser section are selected so that the sintering temperatures for the respective materials are nearly equal to each other and the shrinkages thereof during the firing process are similar to each other. On the contrary, the second embodiment has no such limitation regarding the porcelain substrate, which increases the degree of freedom on the material selection. A ceramic type material is preferably used for the porcelain substrate and an oxide type ceramic, such as alumina, steatite, forsterite, mullite or corderite, is preferably used. Also, a so-called glassy ceramic which is a composite of glassy material and oxide, or aluminum nitride may be used for this purpose. Such materials for the porcelain substrate generally have a higher sintering temperature compared to those for the ferrite section and the condenser section, particularly to that for the electrode in the condenser section. Therefore, if the respective sections must be simultaneously fired, the selection of material for the porcelain substrate is limited. To solve such a problem on the material selection, the preliminarily-sintered porcelain substrate is used as in the second embodiment.

In the first and second embodiments described above, the ferrite section and the dielectric layer in the condenser section are bonded together after they have been molded into green sheets, respectively. However, the ferrite section and the dielectric layer in the condenser section may be formed through the printing process. According to a third embodiment described below, the ferrite layer is formed by printing a ferrite paste instead of the green sheet, and a number of LC substrates are simultaneously formed in one piece, which then is divided into individual LC substrates.

First, through-holes are provided in a large green sheet having a size capable of producing a plurality of porcelain substrates. At this stage, snaps (grooves) are provided at predetermined positions in the green sheet for defining individual profiles of the LC substrates and for dividing the sheet into the individual LC substrates after the completion. The green sheet thus obtained may be used in the succeeding process as it is or after being fired. The explanation will be made while assuming that the green sheet has been fired.

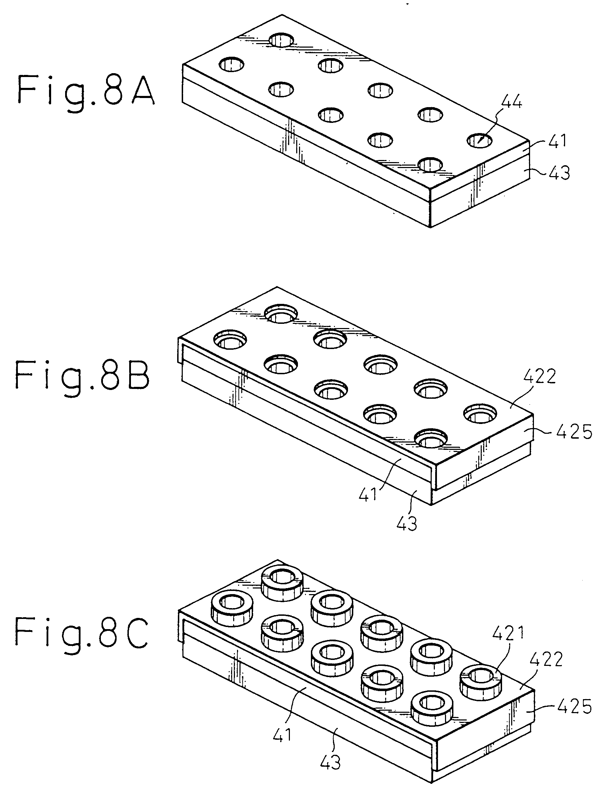

A ferrite paste is printed in a necessary area on the porcelain substrate; i.e., all over one surface thereof except for the vicinity of the through-holes. The printing operation is conducted by a screen printing system. In addition, the electro-conductive paste is printed to provide a common electrode. If this green sheet were fired at this stage, a semi-finished product shown in Fig. 8B would be obtained, wherein the ferrite section on which the electro-conductive layer is formed is added to the porcelain substrate. However, in the illustrated embodiment, a molded green sheet for the condensers is bonded to the former green sheet and electrodes are printed with the electro-conductive paste thereon. The assembly is fired thereafter. Finally the assembly is divided into individual LC substrates along the snaps (grooves) described above.

In a fourth embodiment, the condenser section is formed by a printed paste, instead of a green sheet for the condensers. A common electrode is printed on an assembly of the porcelain substrate and the ferrite layer in a green sheet state or a fired state, and a paste of dielectric material for the condensers and a paste for the electrode are sequentially printed thereon. By firing this assembly, the LC substrate is produced.

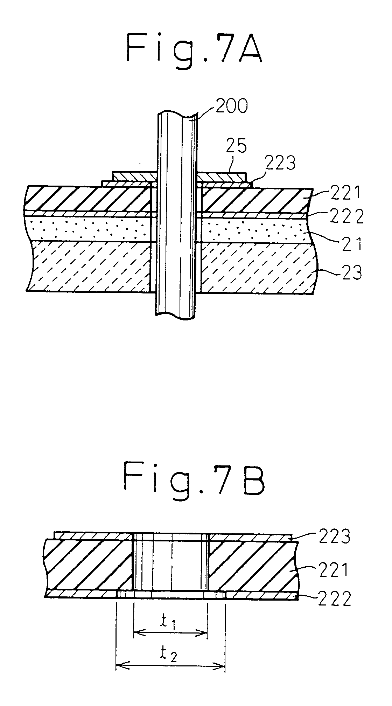

Figs. 7A and 7B illustrate the LC substrate, into which a lead is inserted, obtained in accordance with the above-mentioned embodiments wherein the condenser section is integrally formed by bonding a green sheet or printing a paste.

In Fig. 7A, reference numeral 21 denotes the ferrite layer, and 23 denotes the porcelain substrate. Reference numerals 221, 222 and 223 denote the dielectric material for the condenser section, the common electrode and the individual electrode for the through-hole, respectively. Reference numeral 25 denotes a solder connecting the electrode 223 with the lead 200.

Fig. 7B is an enlarged view of the condenser section solely, wherein part of the common electrode 222 is removed as illustrated in the vicinity of the through-hole, corresponding to an area within a circle defined by a diameter t₂ larger than that t₁ of the through-hole. The LC substrate may be incorporated in an electric unit after being supplied to the market. In such a case, leads 200 arranged in a row are inserted into the LC substrate at this stage and soldered to the electrodes 223. Alternatively, the firing and the soldering of the LC substrate may be conducted during the production of a connector with the LC substrate, while incorporating the leads therein.

In the above embodiment, the condenser section is formed as a layer by a green sheet or printing. The condenser section may be formed by combining individual through-type condensers with each other, as described in a fifth embodiment.

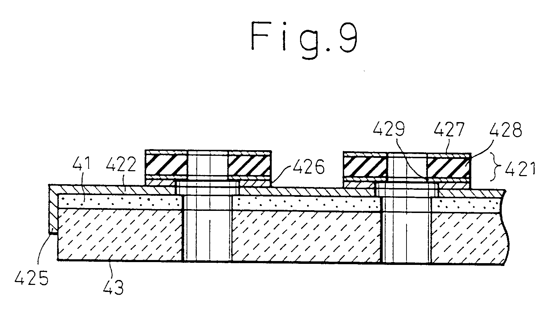

Figs. 8A through 8C are illustrations for explaining the production process of LC substrate in the fifth embodiment, and Fig. 9 is a cross-section of part of the completed LC substrate.

According to the fifth embodiment, a porcelain substrate 43 with a ferrite layer 41 integrally formed thereon is prepared through a firing process. Of course, through-holes 44 are provided therein.

Next, as shown in Fig. 8B, an electro-conductive layer 422 is printed with an electro-conductive paste on the surface of the ferrite layer 41. The electro-conductive paste is also printed on the side surface as an extension 425. After firing, the ferrite layer having the electro-conductive layer as shown in Fig. 2 is obtained, while being reinforced by the porcelain substrate as described in the third embodiment. Due to the porcelain substrate 43, the resultant substrate assembly has a larger rigidity than that shown in Fig. 2.

Then, as shown in Fig. 8C, the through-type condensers 421 with a solder on the electrode thereof are adhered to the substrate assembly so that the through-holes are aligned to each other. Thereafter, the semi-finished product is treated in a soldering furnace, whereby a completed product is obtained.

A cross-section of the completed product is shown in Fig. 9. Reference numeral 43 denotes the porcelain substrate; 41 the ferrite layer; 422 the electro-conductive layer; 425 the extension of the electro-conductive layer; 421 the through-type condenser; 427 the electrode to be connected to the lead; 428 the dielectric material; 429 the electrode to be connected to the electro-conductive layer 422; and 426 the solder for connecting the electrode 429 to the electro-conductive layer 422.

In either of the above embodiments of an LC substrate and a method for the production thereof, it is possible to form a large scale substrate in which a plurality of LC substrates are provided and divide the same into the individual LC substrates, as in the third embodiment, so that the production efficiency is more enhanced.

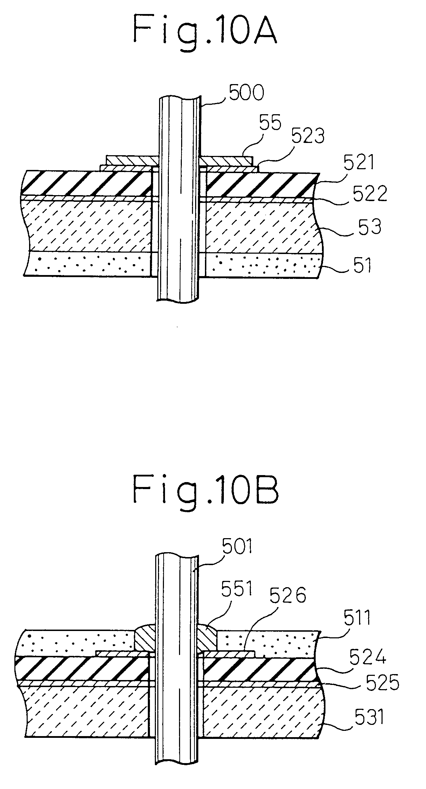

While the porcelain substrate, ferrite layer and condenser section are sequentially layered in this order in the above-described embodiments, it is also possible to layer them either in the order of a ferrite layer 51, a porcelain substrate 53 and a condenser section as shown in Fig. 10A or in the order of a porcelain substrate 531, a condenser section and a ferrite layer 511 as shown in Fig. 10B, unless the individual through-type condensers are used as in the fifth embodiment. When the individual condensers are used, the laying order of the ferrite layer 51, the porcelain substrate 53 and the condenser section shown in Fig. 10A can be adopted. On the other hand, if the laying order shown in Fig. 10B is adopted, the condenser section is sandwiched by the porcelain substrate 531 and the ferrite layer 511. In such a case, it is necessary to somewhat widen the through-hole of the ferrite layer 511 so that a solder can flow thereinto to connect the electrode of the individual through-type condenser of the condenser section to the lead, or to provide an electrode by coating the inner wall of the respective through-hole of a green sheet for the condensers with an electro-conductive paste to be continuous to the electrode of the respective condenser, which electrode in the inner wall of the through-hole is then connected to the lead inserted into the through-hole by a solder or the like.

An example will be described, wherein the filter substrate for a connector according to the first aspect of the present invention is incorporated in a connector.

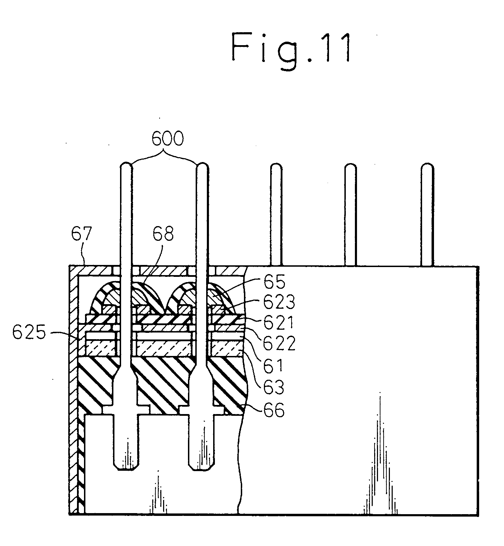

Fig. 11 illustrates a partial cross-section of a connector incorporating the filter substrate described with reference to the above embodiments. In the drawing, reference numeral 600 denotes a lead (connector pin); 66 a resin for fixing the lead 600; and 67 a shield case connected to the earth line of an appliance.

The IC substrate includes a ferrite layer 61, a porcelain substrate 63, an electro-conductive layer 622, a dielectric plate 621 for a condenser and an electrode 623. After being fitted with the leads 600, the IC substrate is fixedly secured thereto with a solder 65, and then covered with a resin 68. An extension 625 of the electro-conductive layer 622 is in contact with the shield case 67 in the assembled state to connect the same to the electro-conductive layer 622.

The first aspect of the present invention wherein the ferrite section is in a layer form is explained as stated above. Various methods can be adopted for the production thereof. Particularly, various modifications are possible for incorporating the condenser section in an integral manner. It will almost be impossible to show all of them as embodiments. However, any combinations of components of the embodiments described hereinbefore may constitute the variation of substrate structure and method for the production thereof.

According to the filter substrate for a connector of the first aspect of the present invention, the ferrite section is formed as a layer. When the ferrite layer is formed on the filter substrate, the thickness of the ferrite layer must be thickened to some extent for the purpose of obtaining a sufficient magnitude of inductance. This rises the material cost for ferrite and inhibits the miniaturization of connector size due to the increase of ferrite layer thickness. Also, when the ferrite layer is formed on the substrate by a printing such as a screen printing, it is difficult to obtain a ferrite layer with a sufficient thickness by a single cycle of the screen printing. Since the magnitude of inductance largely relies on a thickness of the ferrite layer, i.e., a length thereof in the direction of contact pin, it is necessary to form the ferrite layer through a plurality of printing cycles for the purpose of obtaining a sufficient magnitude of inductance, which results in an increase in the production cost.

A filter substrate for a connector according to a second aspect of the present invention is proposed to solve such a problem inherent to the first aspect.

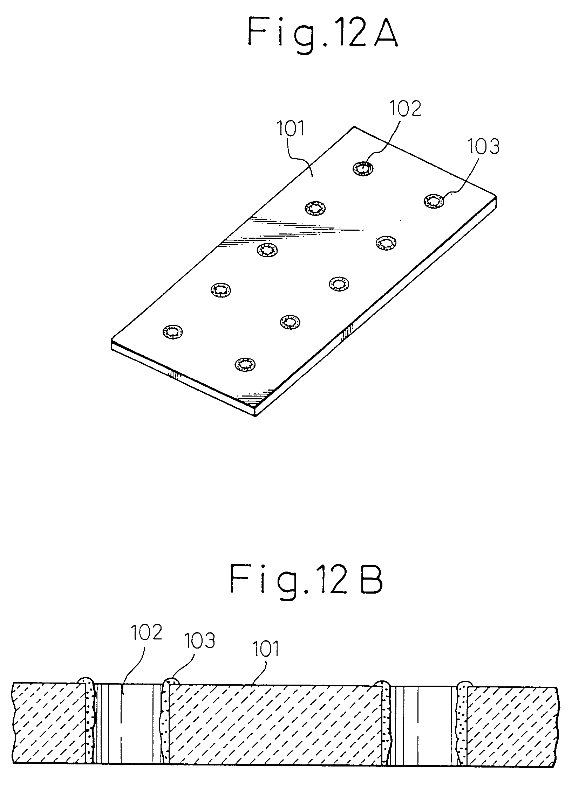

Figs. 12A and 12B illustrate a basic structure of a filter substrate according to the second aspect of the present invention, embodied as a sixth embodiment. Fig. 12A represents an over-all perspective view and Fig. 12B represents a cross-section along a plane including center lines of through-holes. In the drawings, reference numeral 101 denotes a porcelain substrate; 102 a through-hole; and 103 a ferrite section. As illustrated, the filter substrate according to the second aspect of the present invention has the ferrite section 103 formed in the inner wall of the through-hole 102 of the porcelain substrate 101.

When connector pins are inserted into such a filter substrate, the respective pin is encircled by the ferrite section to enjoy the filtering effect.

Since the ferrite section 103 is provided in the inner wall of the through-hole 102 of the porcelain substrate 101, in the filter substrate according to the present invention, a total thickness of the filter substrate can be reduced because it includes solely the porcelain substrate 101. Also, since a length of the ferrite section 103 in the direction of the contact pin, corresponding to the thickness of the porcelain substrate, can be obtained by a single cycle alone, a sufficient magnitude of inductance is easily guaranteed.

A production method of the filter substrate according to the sixth embodiment will be described below in more detail. It is necessary that the porcelain substrate 101 is made of an electro-insulating substance, and is durable against high temperature such as in a range from 800 to 1,300°C during the sintering process for the formation of ferrite section 103. Therefore, ceramic type substances are favorably used for the substrate. Particularly, oxide type ceramics such as alumina, steatite, forsterite, mullite or cordierite are suitable. Also, a so-called glassy ceramic which is a composite of glassy material and oxide, or aluminum nitride may be used for this purpose.

The through-hole must be provided prior to the firing of the substrate. This is because the machining of the hole on the fired substrate is difficult and results in an increase in production cost.

Of course, the through-hole must have a sufficient inner diameter to allow a contact pin to pass therethrough after the formation of the ferrite section. The inner diameter of the through-hole should be decided in view of the thickness of the ferrite section.

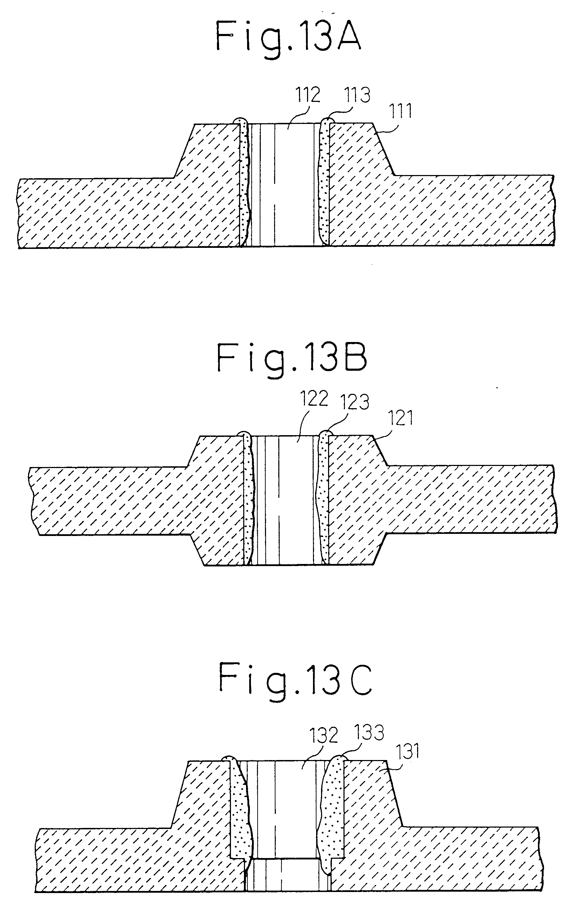

The thickness of the substrate is decided so that the substrate itself has a suitable strength in practical use and so that a desired length of ferrite layer is obtained. However, if the thickness of the substrate increases in accordance with the need for the length of the ferrite layer, the weight of the substrate naturally increases, which also results in an increase in the production cost. In such a case, it is necessary to modify the profile of the through-hole. Figs. 13A through 13C show several examples of such modifications, wherein a thickness of a substrate 111, 121 or 131 is thickened solely in an area in the vicinity of a through-hole 112, 122 or 132, so that the length of the ferrite section 103 is increased without increasing the weight of the substrate 101. According to Fig. 13C, the through-hole 132 has a stepped portion so that the thickness of the ferrite section can be increased.

A paste containing ferrite powder is used for forming the ferrite section on the inner wall of the through-hole. The ferrite paste consists of an inorganic powder mainly comprised of ferrite powder mixed with a sintering agent, which is kneaded with an organic vehicle and organic solvent to a paste form. Such a ferrite paste is marketed, for example, from ESL Corporation (U.S.A.) under the trade name EX-2000. This kind of paste can also be prepared in accordance with the known method. This ferrite paste is molded into a sheet form and dried, then the above-mentioned green sheet is obtained.

The ferrite paste is coated on the inner wall of the through-hole, fired after the removal of solvent, and thus integrated with the substrate.

The coating of the ferrite paste on the inner wall of the through-hole is suitably carried out by a pin system or a through-hole printing system while using thick-film printing.

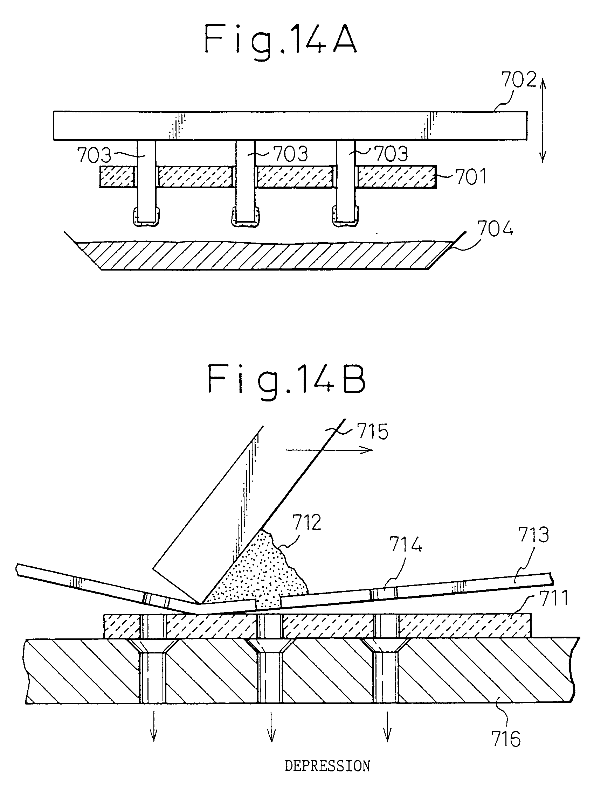

Figs. 14A and 14B illustrate methods for forming the ferrite section, each representing a pin system and a screen printing system, respectively. Since the ferrite paste has not been known in the prior art, the ferrite section has not been formed through such methods. However, the methods themselves have been known in the art.

In Fig. 14A, reference numeral 702 denotes a pin board on which pins 703 are arranged while corresponding to through-holes 703 provided on a porcelain substrate 701, wherein the respective pin has an outer diameter nearly equal to an inner diameter of the through-hole having the ferrite layer on the inner surface thereof. Reference numeral 704 denotes a paste pan for storing the ferrite paste. The formation of ferrite section is carried out as follows: while holding the substrate 701 as illustrated, the pin board 702 is lowered so that the pins passes the through-holes of the substrate 701 until a tip end of the pin 703 dips into the ferrite paste in the paste pan 22. Thereby the ferrite paste sticks to the tip end of the pin 703. Then, while the pin board 702 is elevated so that the pin 703 passes the through-hole, the ferrite paste stuck to the tip end is transferred to the inner wall of the through-hole, thus forming the ferrite section.

In Fig. 14B, reference numeral 713 denotes a perforated plate or a screen plate, having openings 714 corresponding to the through-holes of the substrate 711. Reference numeral 715 denotes a squeegee for spreading the ferrite paste 712 while pressing the same onto the screen plate 713. Reference numeral 716 denotes a member for holding the substrate 711, having openings corresponding to the through-holes of the substrate 711 and decompressed from the underside. While positioning the screen plate 713 so that the openings 714 are aligned with the through-holes, the squeegee 715 is operated to push the ferrite paste 712 into the openings 714. The ferrite paste 712 in the opening oozes out underside and spreads along the inner wall of the through-hole, due to the negative pressure in the opening 714, to form the ferrite section.

The paste may be coated not only on the inner wall of the through-hole but also on the peripheral area of the opening.

The formation of the ferrite section has been briefly explained. Since such methods themselves have been known in the art as stated before, a more detailed explanation thereof will be unnecessary.

The filter substrate thus obtained on which the ferrite section is provided may be incorporated as it is into a connector to form a noise-suppression connector. However, to further enhance its performance, the filter substrate is preferably combined with through-type condensers. To achieve such a combination, various methods can be adopted, such as a method wherein individual through-type condensers are connected to connector pins or a method wherein a through-type condenser section is formed on the filter substrate by a thick film printing system and connected to the contact pins.

Particularly, according to the latter method, the through-type condensers integral with the substrate similar to the ferrite layer can be formed at once, whereby a filter substrate having high reliability, a simple structure and a low cost is obtained.

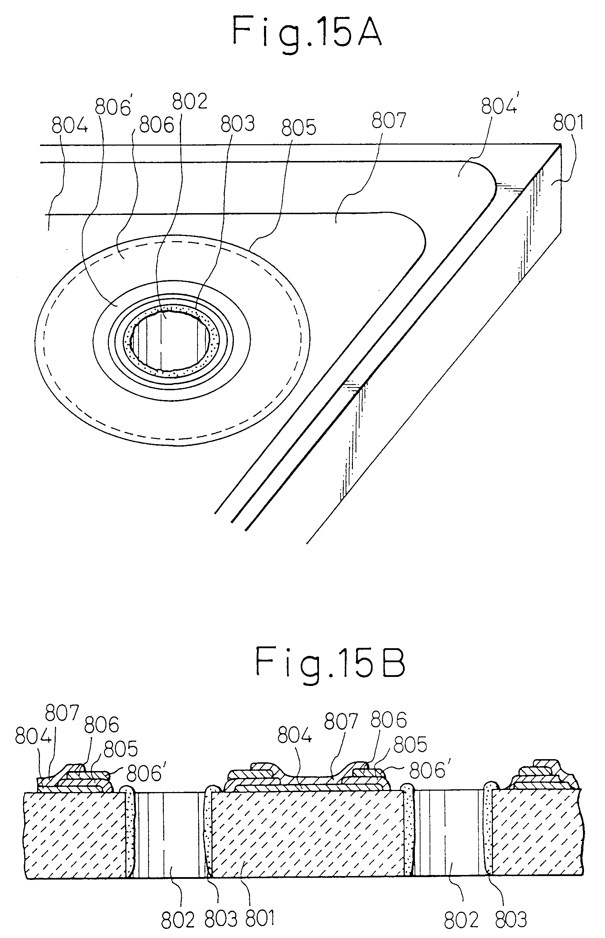

There is no limitation in the configuration of through-type condensers to be formed on a filter substrate by a thick film printing system, and a typical example thereof will be shown in Figs. 15A and 15B, as a seventh embodiment.

Figs. 15A and 15B illustrate the seventh embodiment of a filter substrate according to the present invention, in which a ferrite section and through-type condensers obtained by a thick film printing system are integrally incorporated. Fig. 15A is a perspective view showing a through-hole area and Fig. 15B is a sectional view taken along a plane including center lines of the through-holes. Reference numerals 801 denotes a substrate; 802 a through-hole; and 803 a ferrite section. Reference numerals 804 through 807 represent components of the through-type condenser wherein 804 denotes a lower electrode; 805 a dielectric body, 806 an upper electrode; and 807 a protective insulating film.

The lower electrode 804 has an exposed portion 804' for connection to a ground line, and the upper electrode 806 has an exposed portion 806' for connection to a connector pin.

Next, a method for the production of the filter substrate according to the seventh embodiment shown in Figs. 15A and 15B will be explained.

First, a ferrite paste is coated by printing on the inner wall of a through-hole of the porcelain substrate 801 which has been preliminarily fired, after the formation of through-holes, and dried. Then the same is fired at 900°C for ten minutes. Thereby, the porcelain substrate 801 having the ferrite section 803 on the inner wall of the through-hole is produced. Further, a silver or silver/palladium paste is printed on an area corresponding to the lower electrode 804, dried and fired at 900°C for ten minutes. Thus the lower electrode 804 is formed. Then, the printing and drying of a paste of dielectric substance of the condenser section, mainly comprised of perovskite compound powder such as barium titanate or lead titanate, are repeated three times to form a dielectric paste layer with a predetermined thickness, which then is fired at 900°C for ten minutes. Thereby, a dielectric layer for the condenser section is formed. Further, a silver or silver/palladium paste is coated by printing on an area corresponding to the upper electrode 806, dried and fired at 900°C for ten minutes. Thus the upper electrode 806 is formed. A glass powder paste is printed in a pattern so that an area corresponding to the exposed portion 806' of the upper electrode 806 is formed, dried and fired at 530°C for ten minutes, whereby the protective insulating film is obtained. Thus, a filter substrate for a connector is completed.

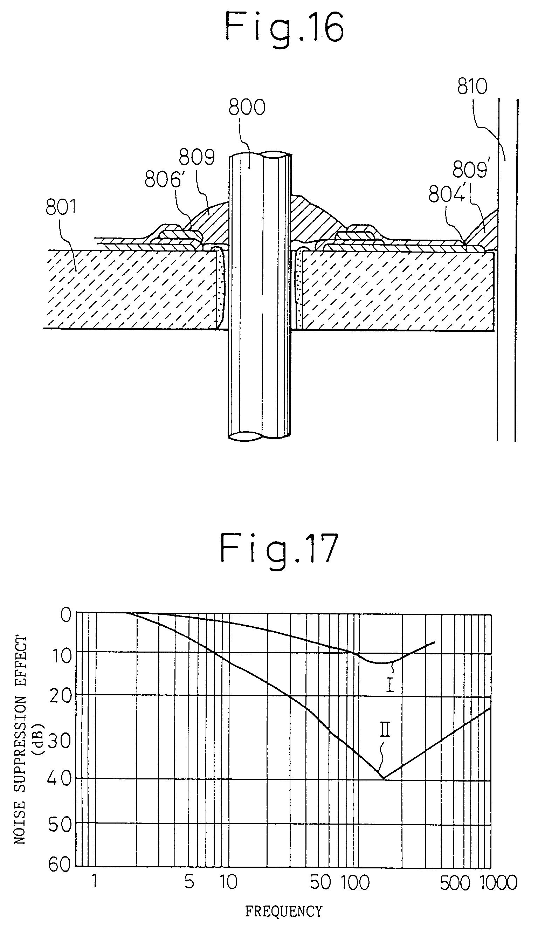

The incorporation of the filter substrate thus obtained into a connector is carried out in a manner shown in Fig. 5. As shown in Fig. 16, a connector pin 800 is connected to the exposed portion 806' of the upper electrode by a solder or an electro-conductive adhesive 809. While, the lower electrode 804 is connected to a grounded metallic housing 810 by a solder or an electro-conductive adhesive 809' at the exposed portion 804' of the lower electrode 804. Such a filter substrate may be produced as a single product, but since a size thereof is rather small, it is preferably handled during the production process as an assembly of a plurality of semi-finished products on a large sized substrate in a manner similar to that explained with reference to the production of the filter substrate of the first aspect, and divided into individual products after the process has been completed, whereby the production efficiency is enhanced to reduce the production cost.

In the latter method, it is favorable to preliminarily provide grooves called snaps on the assembly substrate along lines to be divided. Alternatively, laser cutting or machine cutting is also effective.

The filtering effects of the filter substrate actually produced according to the present invention will be described below.

A filter substrate for fifteen pins was produced, to be incorporated in a connector called a D type subconnector. The substrate used was comprised of 96% alumina. Characteristic thereof is shown in Fig. 17 wherein an abscissa represents a frequency and a coordinate represents an insertion loss.

In a first instance, a ferrite paste was coated on the inner wall of a through-hole by a through-hole printing which is provided on a substrate of 1.0 mm thick, and fired at 900°C after being dried.

A noise suppression effect was measured on this filter substrate under the same conditions as when it is incorporated into a connector, and is shown as a characteristic curve I in Fig. 17. This filter substrate exhibits the noise suppression effect in a range from 3 to 10 dB in a frequency range from 10 to 100 MHz.

In a second instance, through-type condensers were formed by thick film printing on a filter substrate as described above and as shown in Figs. 15A and 15B.

A noise suppression effect was measured on this filter substrate under the same conditions as when it is incorporated into a connector, and is shown as characteristic curve II in Fig. 17. This filter substrate exhibits the noise suppression effect in a range from 12 to 39 dB in a frequency range from 10 to 1000 MHz.

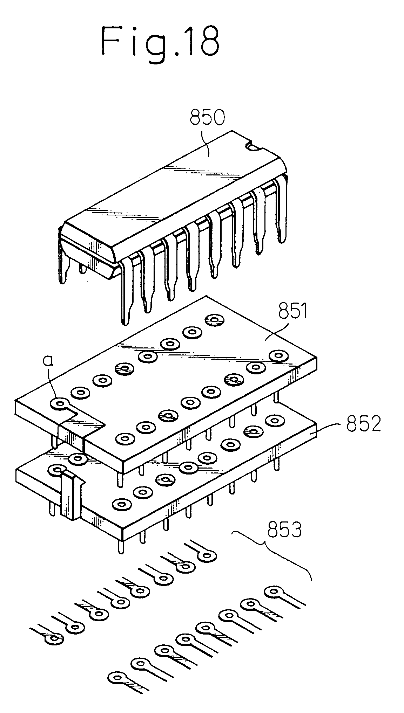

In the description stated above, a filter substrate according to the present invention is used together with a connector. However, it can be used with parts other than a connector to reduce noise, provided the latter has a structure similar to the connector. Fig. 18 illustrates an example wherein a socket formed of a filter substrate according to the present invention is fitted to a conventional IC socket to reduce noise.

In the drawing, reference numeral 850 denotes an IC; 852 a conventional IC socket; and 853 a wiring on a printed circuit board. This assembly is usually used as it is. In this case, however, the conventional IC socket 852 is fitted with an IC socket 851 formed of a filter substrate according to the present invention, to which the IC 850 is fitted.

The IC socket 851 formed of the filter substrate is one which has, on the underside of the porcelain substrate of the filter substrate described herein before, pins to be in contact with leads of the IC 850 when the latter is fitted. These pins are integrally incorporated into the porcelain substrate prior to the firing thereof.

The upper electrode of the condenser section extends into the inner wall of the respective through-hole so that it can be in contact with the leads of the IC 850 when the latter is fitted. A common electrode is connected to pins a which in turn are connected to a ground for the circuit.

Since the porcelain substrate of the IC socket formed of the filter substrate shown in Fig. 18 is rigid, it is possible to use the IC socket as it is as a socket. In this regard, the socket formed of the filter substrate may be directly mounted to the printer circuit board without the intervention of the conventional IC socket 852.

As stated above, according to the present invention, it is possible to produce an LC substrate of a small size at a high production efficiency, which can be easily handled in various fields of application.

Since a ferrite layer which is an inductance element can be formed as a whole irrespective of the number of through-holes, the filter substrate for a connector according to the present invention can be easily produced at a low manufacturing cost and can be readily incorporated in a connector at a low assembly cost.

### CAPABILITY OF EXPLOITATION IN INDUSTRY

In the filter substrate for a connector according to the present invention, L and, if necessary, C are integrally incorporated in the substrate whereby the production cost can be reduced. Also, it can be easily incorporated in the connector, resulting in the higher reliability and a wider application for noise suppression in a connector.

## Claims

1. A filter substrate for a connector, to be incorporated into a connector for noise suppression, having a plurality of through-holes (4) in a row arrangement to be fitted with leads, characterized by comprising
a porcelain substrate (3) having a plurality of through-holes (4) to be fitted with the leads, and
a ferrite section (1) formed integrally with the porcelain substrate (3) and having a plurality of through-holes (4) to be fitted with the leads.

2. A filter substrate for a connector as defined by claim 1, characterized in that the ferrite section (1) is in a layer form.

3. A filter substrate for a connector as defined by claim 2, characterized by further comprising a condenser section (12) having a plurality of through-type condensers, each provided for the respective through-hole and having a through-hole common to the through-hole.

4. A filter substrate for a connector as defined by claim 3, characterized by further comprising a common electrode (222) commonly connected to an electrode of the through-type condenser which is not connected to the lead (100).

5. A filter substrate for a connector, as defined by claim 3 or 4, characterized in that the condenser section (12) is a dielectric body in a layer form having a plurality of through-holes to be fitted with the leads (100); the dielectric body in a layer form having electrodes on both surfaces thereof, one group (223) of the electrodes being independently provided from each other at the peripheral areas of the respective through-holes (224).

6. A filter substrate for a connector as defined by claim 5, characterized in that the ferrite section (21) is provided on the porcelain substrate (23) and the condenser section (22) is provided on the ferrite section (21).

7. A filter substrate for a connector as defined by claim 5, characterized in that the ferrite section (51) is provided on one surface of the porcelain substrate (53) and the condenser section is provided on the other surface of the porcelain substrate (53).

8. A filter substrate for a connector as defined by claim 5, characterized in that the condenser section is provided on the porcelain substrate (531) and the ferrite section (511) is provided on the condenser section.

9. A filter substrate for a connector as defined by claim 4, characterized in that the through-type condenser in the condenser section is individually mounted onto the common electrode (422) so that the through-holes (44) are aligned with each other.

10. A filter substrate for a connector as defined by claim 9, characterized in that the ferrite section is provided on the porcelain substrate and the condenser section is provided on the ferrite section.

11. A filter substrate for a connector as defined by claim 9, characterized in that the ferrite section is provided on one surface of the porcelain substrate and the condenser section is provided on the other surface of the porcelain substrate.

12. A filter substrate for a connector as defined by claim 1, characterized in that the ferrite section (103) is formed in the inner wall of the through-hole (102) of the porcelain substrate (101).

13. A filter substrate for a connector as defined by claim 12, characterized in that the condenser section comprises a plurality of through-type condensers, each provided for the respective through-hole (102) and having a through-hole to be aligned with the through-hole (102).

14. A filter substrate for a connector as defined by claim 13, characterized in that electrodes of the through-type condensers which are not connected to the leads are connected to a common electrode (804).

15. A filter substrate for a connector as defined by claim 13 or 14 characterized in that the condenser section is a dielectric body in a layer form having a plurality of through-holes to be fitted with the leads; the dielectric body in a layer form having electrodes on both surfaces thereof, one group of the electrodes being independently provided from each other at the peripheral areas of the respective through-holes.

16. A filter substrate for a connector as defined by claim 14, characterized in that the through-type condenser in the condenser section is individually mounted onto the common electrode so that the through-holes are aligned with each other.

17. A method for producing a filter substrate, for a connector, integrally formed of a porcelain substrate and a ferrite section having a plurality of through-holes to be fitted with leads, characterized by the processes of
forming a green sheet for the porcelain substrate by shaping a material of the porcelain substrate into a sheet form,
forming a portion corresponding to the ferrite section in the green sheet for the porcelain substrate, and
firing the assembled green sheet.

18. A method for producing a filter substrate for a connector as defined by claim 17, characterized in that the formation of the portion corresponding to the ferrite section comprises a process for forming a green sheet for the ferrite section, and a process for bonding the green sheet for the ferrite section to the green sheet for the porcelain substrate.

19. A method for producing a filter substrate for a connector as defined by claim 18, characterized in that the formation of the through-holes is simultaneously carried out in the green sheets for the ferrite section and in the porcelain substrate.

20. A method for producing a filter substrate for a connector as defined by claim 18, characterized in that the formation of through-holes is separately carried out on the green sheets for the porcelain substrate and the ferrite section, and both the green sheets are bonded together while the corresponding through-holes are aligned with each other.

21. A method for producing a filter substrate for a connector as defined by claim 17, characterized in that the ferrite section is printed on the green sheet for the porcelain substrate on which the through-holes have been formed.

22. A method for producing a filter substrate for a connector integrally formed of a porcelain substrate and a ferrite section having a plurality of through-holes to be fitted with leads, characterized by the processes of
forming a green sheet for the porcelain substrate by shaping a material for the porcelain substrate into a sheet form and then molding the same to have the through-holes,
firing the green sheet for the porcelain substrate,
forming a portion corresponding to the ferrite section in the fired porcelain substrate, and
firing the assembled green sheet as a whole.

23. A method for producing a filter substrate for a connector as defined by claim 22, characterized in that the formation of the portion corresponding to the ferrite section comprises a process for forming a green sheet for the ferrite section including the molding of the through-holes, after shaping a dough of a material for the ferrite section into a sheet form, and a process for bonding the green sheet for the ferrite section with the fired porcelain substrate.

24. A method for producing a filter substrate for a connector as defined by claim 22, characterized in that the ferrite section is printed on the fired porcelain substrate.

25. A method for producing a filter substrate for a connector as defined by any one of claims 17 through 24, characterized in that a plurality of the filter substrates for a connector are produced as an assembled substrate, which is divided, after the completion thereof, into individual filter substrates.

26. A method for producing a filter substrate for a connector integrally formed of a porcelain substrate, a ferrite section having a plurality of through-holes to be fitted with leads, and a condenser section, characterized by the processes of
forming a green sheet for the porcelain substrate by shaping a material for the porcelain substrate into a sheet form,
forming a portion corresponding to the ferrite section in the porcelain substrate,
forming a portion corresponding to the condenser section in the green sheet for the porcelain substrate or the portion corresponding to the ferrite section, and
firing the assembled green sheet as a whole.

27. A method for producing a filter substrate for a connector as defined by claim 26, characterized in that the formation of the portion corresponding to the ferrite section comprises a process for forming a green sheet for the ferrite section and a process for bonding the green sheet for the ferrite section to the green sheet for the porcelain substrate.

28. A method for producing a filter substrate for a connector as defined by claim 26, characterized in that the formation of the portion corresponding to the ferrite section comprises a process for printing a ferrite paste on the green sheet for the porcelain substrate in a predetermined shape.

29. A method for producing a filter substrate for a connector as defined by any one of claims 26 through 28, characterized in that the formation of the portion corresponding to the condenser section comprises a process for forming a green sheet for the condenser section by shaping a material for the dielectric body of the through-type condenser into a sheet form, a process for printing a common electrode with an electro-conductive paste on one surface of the green sheet for the condenser section except for the peripheral area of the through-hole, a process for printing an electro-conductive paste on the other surface of the green sheet for the condenser section around the respective through-holes so that a discrete electrode pattern is formed, and a process for bonding the green sheet for the condenser section to the green sheet for the porcelain substrate or to the portion corresponding to the ferrite section, while aligning the two sheets with each other.

30. A method for producing a filter substrate for a connector as defined by any one of claims 26 through 28, characterized in that the formation of the portion corresponding to the condenser section comprises a process for printing a common electrode with an electro-conductive paste on the green sheet for the porcelain substrate or the portion corresponding to the ferrite section, except for the peripheral area of the through-hole, a process for forming a green sheet for the condenser section by shaping a material for the dielectric body of the through-type condenser into a sheet form, a process for bonding the green sheet for the condenser section to the common electrode while aligning the two sheets with each other, and a process for printing an electro-conductive paste on the green sheet for the condenser section around the respective through-holes so that a discrete electrode pattern is formed.

31. A method for producing a filter substrate for a connector as defined by any one of claims 26 through 28, characterized in that the formation of the portion corresponding to the condenser section comprises a process for printing a common electrode with an electro-conductive paste on the green sheet for the porcelain substrate or the portion corresponding to the ferrite section, except for the peripheral area of the through-hole, a process for forming a green sheet for the condenser section by shaping a material for the dielectric body of the through-type condenser into a sheet form, a process for printing an electro-conductive paste on the green sheet for the condenser section around the respective through-holes so that a discrete electrode pattern is formed, and a process for bonding the green sheet for the condenser section to the common electrode while aligning the two sheets with each other.

32. A method for producing a filter substrate for a connector as defined by any one of claims 26 through 28, characterized in that the formation of the portion corresponding to the condenser section comprises a process for printing a common electrode with an electro-conductive paste on the green sheet for the porcelain substrate or the portion corresponding to the ferrite section, except for the peripheral area of the through-hole, a process for printing a paste of a dielectric material for the through-type condensers on the upper surface of the common electrode except for the through-holes, and printing an electro-conductive paste on the upper surface of the dielectric body around the respective through-holes so that a discrete electrode pattern is formed.

33. A method for producing a filter substrate for a connector integrally formed of a porcelain substrate, a ferrite section having a plurality of through-holes to be fitted with leads, and a condenser section, characterized by the processes of
forming a green sheet for the porcelain substrate by shaping a material for the porcelain substrate into a sheet form,
firing the green sheet for the porcelain substrate,
forming a portion corresponding to the ferrite section in the fired porcelain substrate,
forming a portion corresponding to the condenser section in the fired porcelain substrate or the portion corresponding to the ferrite section, and
firing the assembled body as a whole.

34. A method for producing a filter substrate for a connector as defined by claim 33, characterized in that the formation of the portion corresponding to the ferrite section comprises a process for forming a green sheet for the ferrite section, and a process for bonding the green sheet for the ferrite section to the fired porcelain substrate.

35. A method for producing a filter substrate for a connector as defined by claim 33, characterized in that the formation of the portion corresponding to the ferrite section comprises a process for printing a predetermined pattern on the fired porcelain substrate with a ferrite paste.

36. A method for producing a filter substrate for a connector as defined by any one of claims 33 through 35, characterized in that the formation of the portion corresponding to the condenser section comprises a process for forming a green sheet for the condenser section by shaping a material for the dielectric body of the through-type condenser into a sheet form, a process for printing a common electrode with an electro-conductive paste on one surface of the green sheet for the condenser section except for the peripheral area of the through-hole, a process for printing an electro-conductive paste on the other surface of the green sheet for the condenser section around the respective through-holes so that a discrete electrode pattern is formed, and a process for bonding the green sheet for the condenser section to the fired porcelain substrate or to the portion corresponding to the ferrite section, while aligning the two sheets with each other.

37. A method for producing a filter substrate for a connector as defined by any one of claims 33 through 35, characterized in that the formation of the portion corresponding to the condenser section comprises a process for printing a common electrode on the fired porcelain substrate or the portion corresponding to the condenser section with an electro-conductive paste, except for the peripheral area of the through-hole, a process for forming a green sheet for the condenser section by shaping a material for the dielectric body of the through-type condenser into a sheet form, a process for bonding the green sheet for the condenser section to the common electrode while aligning the two with each other, and a process for printing an electro-conductive paste on the green sheet for the condenser section around the respective through-holes so that a discrete electrode pattern is formed.

38. A method for producing a filter substrate for a connector as defined by any one of claims 33 through 35, characterized in that the formation of the portion corresponding to the condenser section comprises a process for printing a common electrode on the fired porcelain substrate or the portion corresponding to the ferrite section with an electro-conductive paste, except for the peripheral area of the through-hole, a process for forming a green sheet for the condenser section by shaping a material for the dielectric body of the through-type condenser into a sheet form, a process for printing an electro-conductive paste on the green sheet for the condenser section around the respective through-holes so that a discrete electrode pattern is formed, and a process for bonding the green sheet for the condenser section to the common electrode while the two are aligned with each other.

39. A method for producing a filter substrate for a connector as defined by any one of, claims 33 through 35, characterized in that a process for printing a common electrode on the fired porcelain substrate or the portion corresponding to the ferrite section with an electro-conductive paste, except for the peripheral area of the through-hole, a process for printing a paste of the dielectric material for the through-type condenser on the upper surface of the common electrode except for the peripheral area around the through-hole, and a process for printing an electro-conductive paste on the upper surface of the dielectric material around the respective through-holes so that a discrete electrode pattern is formed.

40. A method for producing a filter substrate for a connector integrally formed of a porcelain substrate, a ferrite section having a plurality of through-holes to be fitted with leads, and a condenser section, characterized by the processes of
forming a green sheet for the porcelain substrate by shaping a material for the porcelain substrate into a sheet form,
firing the green sheet for the porcelain substrate,
forming a portion corresponding to the ferrite section in the fired porcelain substrate,
firing the resultant product,
forming a portion corresponding to the condenser section in the fired porcelain substrate or the portion corresponding to the ferrite section, and
firing the resultant product.

41. A method for producing a filter substrate for a connector as defined by claim 40, characterized in that the formation of the portion corresponding to the ferrite section comprises a process for forming a green sheet for the ferrite section and a process for bonding the green sheet for the ferrite section to the fired porcelain substrate.

42. A method for producing a filter substrate for a connector as defined by claim 40, characterized in that the formation of the portion corresponding to the ferrite section comprises a process for printing a ferrite paste on the porcelain substrate in a predetermined pattern.

43. A method for producing a filter substrate for a connector as defined by any one of claims 40 through 42, characterized in that the formation of the portion corresponding to the condenser section comprises a process for forming a green sheet for the condenser section by shaping a material for the dielectric body of the through-type condenser into a sheet form, a process for printing a common electrode on one surface of the green sheet for the condenser section with an electro-conductive paste, except for the peripheral area of the through-holes, a process for printing an electro-conductive paste on the other surface of the green sheet for the condenser section around the respective through-holes so that a discrete electrode pattern is obtained, and a process for bonding the green sheet for the condenser section to the fired porcelain substrate or the ferrite section while aligning the two with each other.

44. A method for producing a filter substrate for a connector as defined by any one of claims 40 through 42, characterized in that the formation of the portion corresponding to the condenser section comprises a process for printing a common electrode on the fired porcelain substrate or the ferrite section with an electro-conductive paste, except for the peripheral area of the through-hole, a process for forming a green sheet for the condenser section by shaping a material for the dielectric body of the through-type condenser into a sheet form, a process for bonding the green sheet for the condenser section to the common electrode while aligning the two with each other, and a process for printing an electro-conductive paste on the green sheet for the condenser section around the respective through-holes so that a discrete electrode pattern is obtained.

45. A method for producing a filter substrate for a connector as defined by claim 44, characterized in that the common electrode is fired after being printed, and the green sheet for the condenser section is bonded to the fired common electrode.

46. A method for producing a filter substrate for a connector as defined by any one of claims 40 through 42, characterized in that the formation of the portion corresponding to the condenser section comprises a process for printing a common electrode on the porcelain substrate or the ferrite section with an electro-conductive paste, except for the peripheral area of the through-hole, a process for forming a green sheet for the condenser section by shaping a material for the dielectric body of the through-type condenser into a sheet form, a process for printing an electro-conductive paste on the surface of the green sheet for the condenser section around the respective through-holes so that a discrete electrode pattern is obtained, and a process for bonding the green sheet for the condenser section to the common electrode while aligning the two with each other.

47. A method for producing a filter substrate for a connector as defined by claim 46, characterized in that the green sheet for the condenser section is bonded to the fired common electrode.

48. A method for producing a filter substrate for a connector as defined by any one of claims 40 through 42, characterized in that the formation of the portion corresponding to the condenser section comprises a process for printing a common electrode on the porcelain substrate or the ferrite section with an electro-conductive paste, except for the peripheral area of the through-hole, a process for printing a paste of a material for the dielectric body for the through-type condenser on the upper surface of the common electrode, except for the peripheral area of the through-hole, and a process for printing an electro-conductive paste on the dielectric material around the respective through-holes so that a discrete electrode pattern is obtained.

49. A method for producing a filter substrate for a connector as defined by claim 48, characterized in that the common electrode is fired after being printed, and the paste of the dielectric material is printed on the upper surface of the fired common electrode.

50. A method for producing a filter substrate for a connector as defined by claim 48, characterized in that the printed dielectric material for the through-type condenser is fired, and the discrete electrode pattern is printed on the fired dielectric material for the through-type condenser.
